# EUROPEAN PATENT SPECIFICATION

(11) **EP 3 946 675 B1**
(45) Date of publication and mention of the grant of the patent: **06.08.2025**
(21) Application number: 20778627.8
(22) Date of filing: 24.03.2020
(51) Int. Cl.: B01D 29/94, B01D 29/68, B01D 61/16

(54) **SUBSTRATE STRUCTURE FOR WATER PURIFICATION SYSTEM**
SUBSTRATSTRUKTUR FÜR EIN WASSERREINIGUNGSSYSTEM
STRUCTURE DE SUBSTRAT POUR SYSTÈME DE PURIFICATION D'EAU

(30) Priority: 25.03.2019 US 201962823418 P
(43) Date of publication of application: 09.02.2022
(73) Proprietor: Microhaops, Inc., Seattle, WA 98115 (US)
(72) Inventor: BENJAMIN, Mark, Seattle, WA 98115 (US); CAI, Zhenxiao, Kenmore, WA 98028 (US)
(74) Representative: Herrero & Asociados, S.L.
(86) International application number: PCT/US2020/024524
(87) International publication number: WO 2020/198265

(56) References cited:
- WO-A1-2009/106084
- WO-A1-2012/071815
- CN-A- 107 635 637
- US-A- 5 118 421
- US-A- 6 113 792
- US-A1- 2009 283 468
- US-A1- 2010 258 497
- US-A1- 2014 109 534
- US-B1- 6 755 970
- US-B2- 7 662 291
- US-B2- 8 070 951
- MALCZEWSKA, B. ET AL.: "Virtual elimination of MF and UF fouling by adsorptive pre-coat filtration", JOURNAL OF MEMBRANE SCIENCE, vol. 479, 2015, pages 159 - 164, XP055743462

## Description

### TECHNICAL FIELD

The invention relates to water purification systems. More specifically, the invention relates to apparatus for coated membrane water purification systems.

### BACKGROUND OF THE INVENTION

One of the inventors herein is a co-inventor of the inventions disclosed and claimed in U.S. Patent No. 8,070,951 titled, "Method for removing contaminants from liquids using membrane filtration in combination with particle adsorption to reduce fouling" issued December 6, 2011; and U.S. Patent No. 6,113,792 titled, "Method for removing contaminants from water using membrane filtration in combination with particle adsorption to reduce fouling" issued September 5, 2000. These Patents relate to the preparation and use of heated aluminum oxide particles (HAOPs) and Heated Iron Oxide Particles (HIOPs) for water filtration purposes. The disclosures of these references describe these particles being deposited onto a mesh layer through which contaminated water is passed. Once the particles are no longer capable of adsorbing contaminants, the exhausted particles are removed from the membrane, such as by back flushing, and new particles are deposited.

**A few published journal papers describe deposition of a thin layer of HAOPs** onto either a stainless steel mesh that is self-supporting¹ and is too stiff to collapse or a nylon mesh that is prevented from collapsing by being glued to a solid, plastic net backing².
1 "Efficacy of hybrid adsorption/ membrane pretreatment for low-pressure filtration" by Beata Malczewska and Mark Benjamin, Water Research v.99, pp.263-271. http://dx.doi.org/10.1016/j.watres.2016.04.065.
2 "Virtual elimination of MF and UF fouling by adsorptive pre-coat filtration" by Beata Malczewska and Mark Benjamin, Journal of Membrane Science v.479, pp.159-164 (2015). http://dx.doi.org/10.1016/j.memsci.2015.01.032.

**Addition of coagulant or powdered activated carbon (PAC) upstream of conventional UF membrane filtration** is a fairly common technology in current practice. The coagulant typically reacts with water to form particles of iron oxide or aluminum oxide, and the PAC is added as particles. In principle, enough of these particles could accumulate on the membrane to form a layer like the one that we deposit. However, in such applications, the membranes get fouled long before a substantial amount of particles accumulates (less than one-tenth of the doses used in our system), the accumulation of the particles on the membranes is gradual throughout the application cycle rather than as a pulse at the beginning, and the membranes are not collapsible.

**Candle filters** are made by many manufacturers and are well described generically at the website http://www.solidliquid-separation.com/pressurefilters/candle/candle.htm. An example patent is US3637079A https://patents.google.com/patent/US3637079A/en?q=candle&q=filter&oq=candle+filter. These filters consist of cylindrical tubes aligned vertically in a pressurized vessel (typically pressures are 6-10 atmospheres [90-140 psi], far greater than in our application). The flow of water is from outside to inside the tubes, and only particulate contaminants (not dissolved ones) are captured. The particulates that are removed from the water accumulate on the outside of the candles. Once the applied pressure is unable to maintain a satisfactory filtration rate, the collected particles are released by a pulse ("snap blow") of backwash water, sometimes accompanied by vibration and/or high-pressure spraying of the outside of the candles. The candles are rigid, and typically no controlled deposition of "treatment particles" is applied.

In some cases, the candles are precoated with diatomaceous earth (DE). When the system is operated in this way, the coating is sometimes referred to as a "dynamic filter" and bears some similarities to our coated mesh.

Our technology is distinct from these systems in the use of flexible, collapsible mesh as the support and the use of adsorbent solids that collect not only particles that are suspended in solution, but also dissolved contaminants. In addition, the flow in candle filtration is from outside to inside the candles (opposite to that in our system), and the DE layer is typically several millimeters thick, whereas in our system, the layer is typically <0.3 mm thick, so that our approach uses much less disposable material.

**Asymmetric ceramic membranes** (e.g., US5186833A, Composite metal-ceramic membranes and their fabrication) typically consist of a bulk, highly porous ceramic rod within which are numerous hollow lumens. A very thin skin (a few microns thick) of a different ceramic with much smaller pores is permanently deposited around the lumens; this skin is responsible for essentially all the filtration that the unit accomplishes. This arrangement differs from our system in that the filtering material removes only solids (not dissolved contaminants) and is permanently attached.

**Dynamic Membrane Bio-Reactors (DMBR)** have been investigated for wastewater treatment in laboratory setting for a few decades. In these reactors, particles are added to the reactors to form a layer on a support material that can be a membrane or a mesh. In cases where the support is a mesh, in all the reports that I have seen, it is attached to a frame to form a flat sheet. An impermeable backing is secured to the same frame, with a gap between the mesh and the backing. The frame is immersed in a suspension containing the wastewater and microorganisms that consume the biodegradable constituents of the raw wastewater. Inorganic particles are added to this suspension so that when it is filtered through the mesh, the solids that accumulate on the mesh are a mixture of the microorganisms and inorganic particles. In the absence of the added particles, the microorganisms form a sludge that has high hydraulic resistance; the added particles lower the resistance to flow, increasing water flux and allowing thicker layers to develop before the layer must be washed off.

In these systems, the water purification is carried out exclusively by the microorganisms; the added particles remove a negligible amount of contaminants, and are present strictly to enhance the filterability of the sludge. The system design makes it almost impossible to remove all the added particles when they are removed from the mesh, but because those particles do not play a central role in contaminant removal and are present at a much lower concentration than the microorganisms, this feature is not problematic. In fact, the particles can be washed off the mesh, mixed with the bulk water, and reused in the next cycle.

Typical investigations of DMBRs are described by Chu et al. in "Characteristics of biodiatomite membrane process for municipal wastewater treatment", Journal of Membrane Science, v.325, pp.271-276 (2008), and by Ye et al. in "Study on the suitable thickness of a PAC-pre-coated dynamic membrane coupled with a bioreactor for municipal wastewater treatment", Desalination, v.194, pp.108-120 (2006). As noted, DMBRs have been investigated at laboratory scale for at least a few decades, and I am not aware of any DMBRs that have been installed at full-scale, so it appears that there are some drawbacks to this technology that make scale-up difficult or unattractive.

**Dynamic Membranes** that are not coupled to biodegradation by microbes have been investigated in a few laboratories for specialized applications. Semiat's research group has published several papers on the use of zirconium oxide layers deposited on membranes or nonwoven fabrics. The layers were tested for their ability to remove the egg protein ovalbumin (MW 45,000) from water under applied pressures of several atmospheres. Although they attribute the removal of the protein to interaction with the zirconium oxides, they reported that an insignificant amount was removed unless the particles were "post-treated" after deposition with polyacrylic acid. Example publications by this group are: Rumyantsev et al., "Parameters affecting the properties of dynamic membranes formed by Zr hydroxide colloids", Desalination v.131-200 (2000), and Altman et al., "Removal of organic foulants from feed waters by dynamic membranes", Desalination v.125, pp.65-75 (1999).

The systems described in these studies differ from ours in that the contaminants are colloidal and particulate rather than small, dissolved molecules, and so the removal mechanism is primarily filtration rather than adsorption, and the fact that a "post-treatment" of the deposited layer is needed to make it functional. Also, the membrane support was a flat sheet, not a tube, and it is not clear how the dynamic layer can be removed from the support or how effective that process is (there was no mention of this step in the publications).

**Bag filters** made of fabric or mesh are widely used to remove particulates from air; water treatment applications are much rarer, but they do exist. A few example patents for bag filters for air treatment are:
US3747307A
   https://patents.google.com/patent/US3747307A/en?q=bag&q=filters&oq=bag+filters;
US7452396B2
   https://patents.google.com/patent/US7452396B2/en?g=collapsible&q=filter&scholar&oq=collap sible+filter; and
US4323376A
   https://patents.google.com/patent/US4323376A/en?q=bag&q=filters&q=support&oq=bag+filters +support.

An overview of bag filter applications in water treatment is available at https://www.discountfilterstore.com/bag-filters.html, which includes the following:
"The primary job of bag filters is to reduce the amount of silt, sand, dirt and other types of sediment in your water. Some bags have a micron rating small enough to filter out some particulates, but they will not clean out bacteria like e. coli or chemicals like chloramines... Their primary use is in commercial, agricultural and industrial settings. Rarely, if ever, is a bag filter recommended for residential filtration... You can remove the filter from its housing and manually remove the trapped material. The reusability is another key benefit of a bag filter."

Bag filters do not remove dissolved contaminants, or even small particles; they are never cleaned in place, but rather are taken out of their housing for cleaning; and they are never used in conjunction with an intentionally pre-deposited layer of particles to assist in the treatment.

It is therefore an object of the present invention to provide for an apparatus for effectively replacing exhausted adsorption particles in a commercial water purification system.

It is a further object of the present invention to provide for water purification systems which achieves the above object in a commercial water purification system.

It is yet another object of the present invention to provide for a water purification system which achieves the above objects and which is also continuously operable. Document US2010/258497 discloses a treatment module according to the preamble of claim 1.

### SUMMARY OF THE INVENTION

The invention achieves the above objects, and other objects and advantages which will become apparent from the description which follows, by providing a water purification system and apparatus utilizing HAOPs (Heated Aluminum Oxide Particles) deposited on an oversized mesh substrate supported on an undersized frame allowing the mesh to flutter during backwashing to release exhausted HAOPs from the mesh prior to deposition of fresh layer of HAOPs thereon. The use of Heated Iron Oxide Particles (HIOPs) is also contemplated and those terms are used interchangeably herein.

In the preferred embodiments of the invention, the system is provided with modules, having manifolds supporting a plurality of cylindrical tubes for supporting the mesh membranes. A hydraulic logic system employing a plurality of modules is also disclosed.

### BRIEF DESCRIPTION OF THE DRAWINGS

FIGURE 1 is an outer view of fully assembled module.
FIGURE 2 is a module with one end cap removed.
FIGURE 3 is an internal component of a module, showing the outside of an outer end plate and the inside of an inner end plate.
FIGURE 4 is an internal component of a module, showing the inside and outside of an inner end plate.
FIGURE 5 is an end piece and a cylindrical, open tube core, with prongs to hold the stiffening rod.
FIGURE 6 is the same as FIGURE HH-5 (a), but with the stiffening rod in place.
FIGURE 7 is a cutaway view of an end piece for a module with removable tubes.
FIGURE 8-13 are various alternative designs for the tube core.
FIGURE 14 are internal components of a 5-tube module using self-supporting tubes.
FIGURE 15 is a cutaway view of an end piece for tubes that are potted in a module.
FIGURE 16 is a completed treatment tube, including stiffening rod, tube core, and mesh sleeve
FIGURE 17 is an image of the module interior packed with tubes.
FIGURE 18 is a graph of Filtration Time v. SRP concentration.
FIGURE 19 is a schematic representation of a data logging system.
FIGURE 20 is a bar graph of Adsorbent dose v. % of contaminant removal.
FIGURE 21 is a graph of Adsorbent dose v. Head loss
FIGURE 22 is a hydraulic control system diagram for two HAOPs modules.

### DETAILED DESCRIPTION OF THE PREFERRED EMBODIMENTS

Water purification apparatus in accordance with the principles of the invention is generally indicated at reference numeral 10 in the various figures of the attached drawings wherein numbered elements in the figures correspond to like numbered elements herein

### The operation of the system comprises three stages.

**Particle deposition.** The first stage is deposition of adsorbent particles on the interior surface of the mesh tubes or other support surface. This stage is initiated by injection of an aqueous slurry of the particles either accompanied or followed by injection of clean water into the module such that the fluid enters the tube interiors. Simultaneously, permeation across the tubes is allowed; this permeation flow carries the adsorbent particles to the tube walls, where they are captured as the water flows across the wall. The step continues until essentially all the particles have been deposited in layers adjacent to the tube walls. Optionally, the injected solutions can be recirculated axially to facilitate uniform deposition of the particles along the tube walls, and the permeating water can be returned to the tube inlet to minimize loss of both the adsorbent particles and water during this step.

The slurry concentration and water inflow rate should be chosen to assure that particles do not settle appreciably as the water flows through the tube. Optimal values will depend on the particle size and density and the length and orientation of the tubes; typical values are 20-100 grams of solids per liter in the slurry and a liquid flow velocity of 0.2 - 20 cm/s. The portion of the incoming fluid that is recirculated can range from zero to 80%. The step continues until a cake layer containing almost all the injected particles has formed on the tube walls, which typically takes 0.5 - 20 min. Typical thicknesses of the deposited layer can range from 0.1 to 5 mm.

**Feed water filtration.** The second stage in the process is filtration of the feed water to remove the target contaminants. During this step, the flow enters the module and the interior of the tubes. The flow can enter either or both ends of the tubes. If it enters only one end, the opposite end can be closed (dead-end operation) or it can be open, allowing flow to exit and then be returned to the inlet (recirculating flow or crossflow). Throughout this step, the permeation line is opened by an amount that allows the desired rate of outflow from the columns. The outflow is typically expressed as a flux, representing the water flow rate (e.g., liters/hour) divided by the surface area of the tubes (e.g., square meters) to yield a value with units of volume per unit area per unit time (e.g., liters per square meter per hour, LMH). The acceptable flux depends on the identity and concentration of contaminants in the water and the thickness of the deposited layer. Typical values are 50 -2000 LMH.

Filtration continues until some user-defined limit is reached. Typically, these limits relate to the duration of the filtration step (generally, 2-24 hours), the concentration of contaminant in the permeate (generally, 20-80% of the concentration in the feed, or a fixed value set by regulation), or the pressure loss as water passes through the particle layer and tube wall (generally, 0.1 - 2.0 bar).

**Particle removal and system cleaning.** Once the filtration step ends, the layer of particles and any materials that they have collected are washed out of the system. This process can include steps in which water and/or air is forced through the tube from the outside-in, to help separate the particles from the tube wall (backwashing) and/or in which the water and/or air are forced through the tubes axially, shearing more particles off the wall and carrying all the particles and contaminants out of the system (flushing). If the modules are oriented vertically, the flows can be either upward or downward (and, during backwashing, can be both). These steps can be carried out in any sequence and for any duration. Typical values are 1-10 seconds per step, with a complete cleaning step comprising one to 10 steps each of backwashing and flushing.

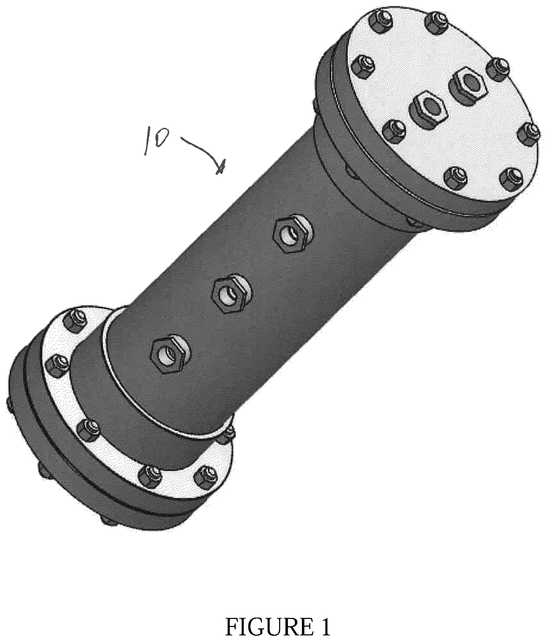

**Figure 1** shows a cylindrical treatment module with five openings for entry and exit of water - three on side of the cylinder (connecting to the "shell" side of the module) and two on the end of the cylinder (connecting to the "tube" side of the module). The module size will depend on the water flow rate to be treated; typical sizes are 7.5-to-30 cm in diameter and 30-to-215 cm long. It can be made of any standard plumbing material that meets the regulatory requirements (*e.g*., NSFcertified if the water being treated is for human consumption) and is chemically compatible with the water to be treated.

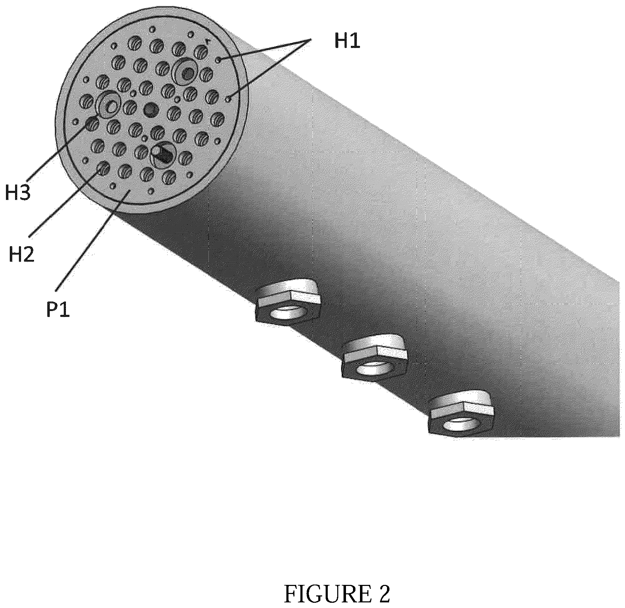

**Figure 2** shows the same module as **Figure 1****,** but with the bottom cap removed to show a plate **(P1)** with three types of holes. The small holes **(H1)** are for screws that hold this plate to a second plate on the interior. The medium size holes **(H2)** are where the end pieces of the treatment tubes penetrate. The large holes **(H3)** are where steel support rods penetrate. Steel rods are shown protruding through all three of the **H3** holes; metal spacers are shown around two of the rods, and the third rod is shown without a spacer.

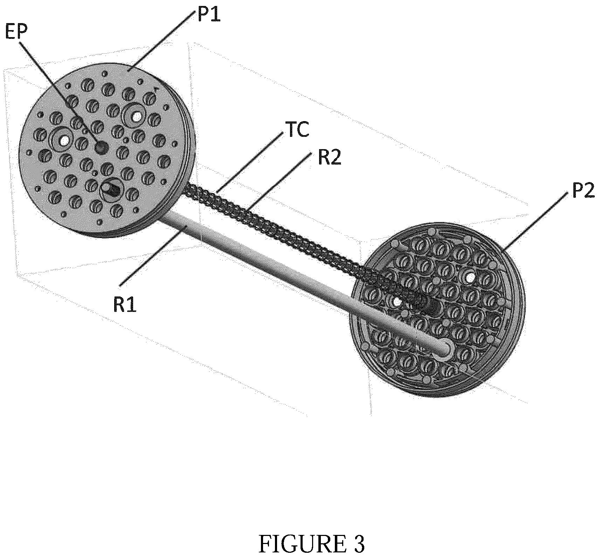

**Figure 3** shows the interior of the treatment module, with one steel rod **(R1)** and one treatment tube core **(TC)** in place. The treatment tube core **TC** is shown in greater detail in subsequent drawings. Inside the treatment tube core **TC** is a rod **R2** made of fiberglass or other stiff material that keeps the core straight. The core snaps into an end-piece **EP1** that is shown in greater detail in subsequent drawings. The drawing shows an outer view of plate **P1** and an inner view of another plate **P2.** A pair consisting of plates **P1** and **P2** is placed at each end of the module, with **P1** on the outside and **P2** on the inside in both cases. The plates are held together by screws that pass from holes **H1** in **P1** to posts **PP1** in **P2.**

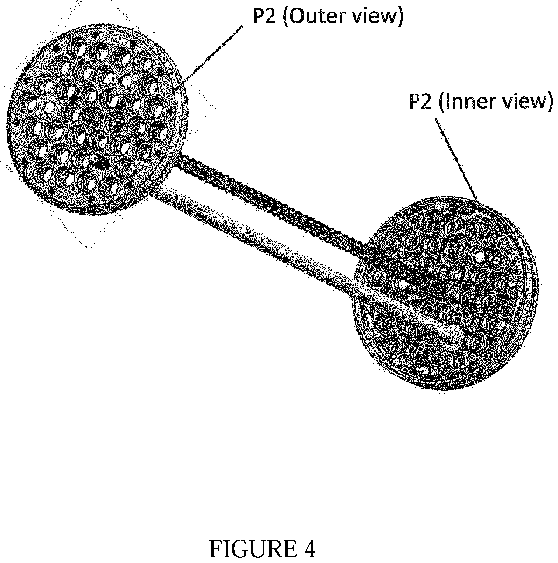

**Figure 4** shows the same image as **Figure 3****,** but with plate **P1** removed from the top of the module.

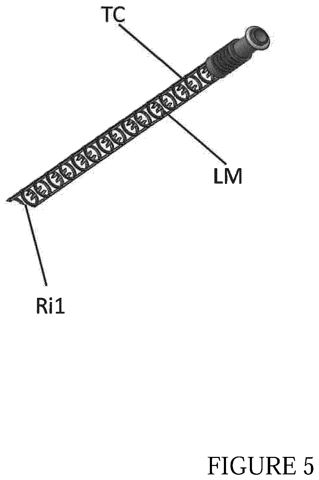

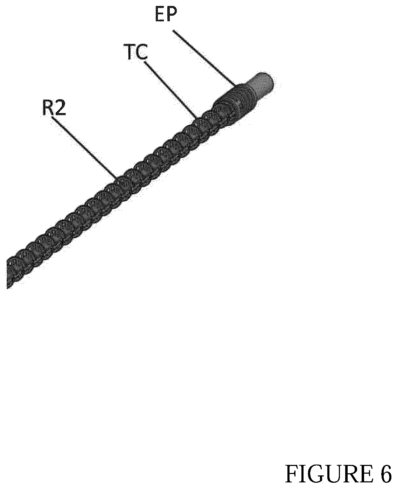

**Figure 5** shows the tube core **TC** and one end-piece **EP1.** The core is a skeletal structure with rings (**Ri1**) attached to longitudinal members **(LM).** In the fully operational system, each tube core **TC** resides inside a loosely-fitting mesh tube sleeve **(TS)** (not shown in this Figure); when water flows from outside to inside the sleeve, the tube core **TC** prevents the sleeve from collapsing on itself. As shown in **Figure 6****,** the prongs on the rings hold the stiff rod **R2** in place, which in turn maintains the linearity of the tube core **TC.** The rod **R2** also serves a function of occupying space so that water entering the core flows out of the system more quickly. A typical diameter for the rod **R2** is 1-to-5 mm. The core can be made any material that meets the same requirements as the module shell. It can be constructed by connecting units that are 7.5-to-61 cm in length and that snap or are glued together to reach the desired length. The core diameter is typically from 0.4-to-2.0 cm, with gaps between the rings of 0.6-to-5.1 cm. The prongs should be long enough so that they just touch the rod **R2.**

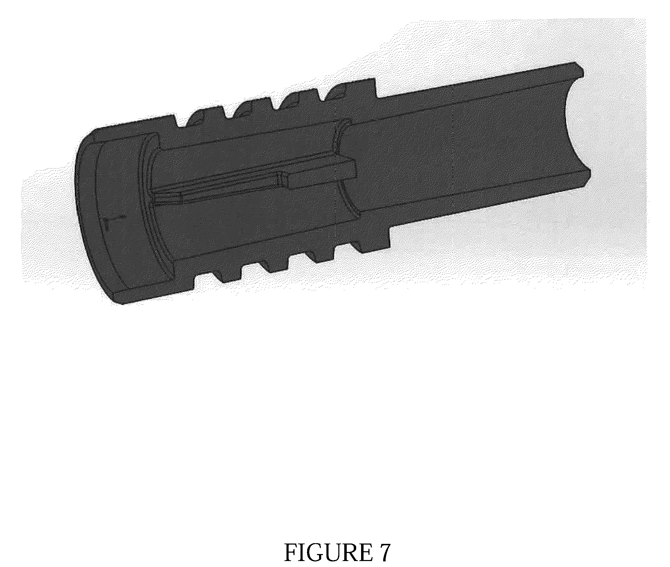

**Figure 7** shows a cross-section of the end piece **EP1.** The smooth outer surface penetrates through the end plates **EP1** and **EP2.** The ribbed outer surface is where the tube sleeve **TS** is attached, and the structure in the interior provides a stop for the rod **R2.**

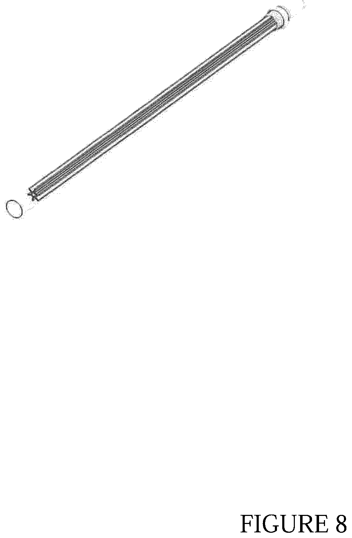

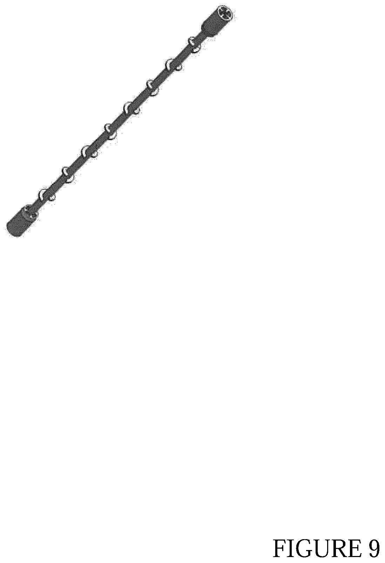

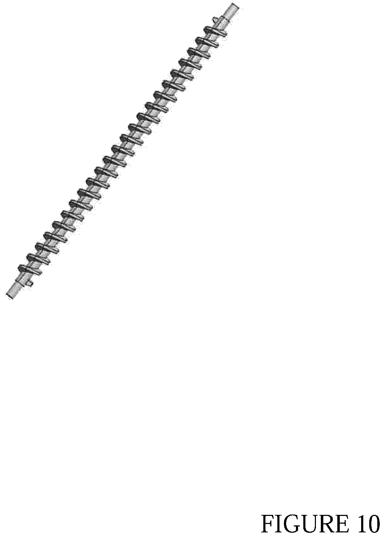

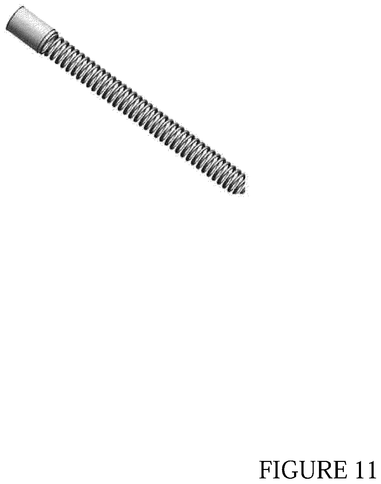

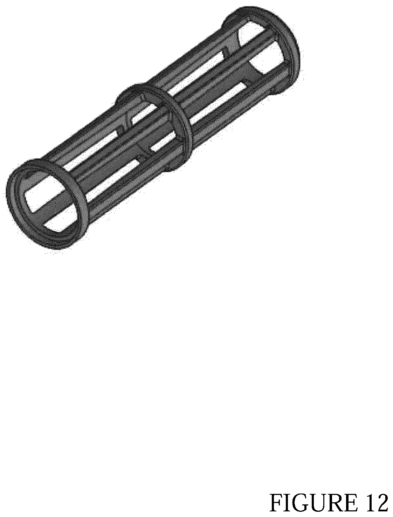

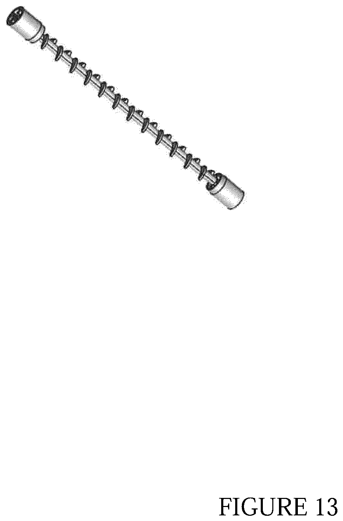

**Figures 8-13** show example alternative designs for the tube core.

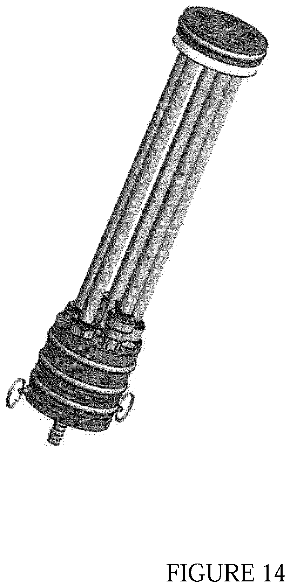

**Figure 14** shows the interior of a similar treatment module but with self-supporting porous tubes (*e.g.* tubular membranes) replacing the combination of tube sleeve **TS,** tube core **TC,** and stiffening rod **R2.** The tubular membranes typically have outside diameters of 0.6-to-5 cm. of the cylinder (connecting to the "shell" side of the module) and two on the end of the cylinder (connecting to the "tube" side of the module). The module size will depend on the water flow rate to be treated; typical sizes are 7.5-to-30 cm in diameter and 30-to-215 cm long. It can be made of any standard plumbing material that meets the regulatory requirements (*e.g.*, NSFcertified if the water being treated is for human consumption) and is chemically compatible with the water to be treated.

**Figure 2** shows the same module as **Figure 1****,** but with the bottom cap removed to show a plate **(P1)** with three types of holes. The small holes **(H1)** are for screws that hold this plate to a second plate on the interior. The medium size holes **(H2)** are where the end pieces of the treatment tubes penetrate. The large holes **(H3)** are where steel support rods penetrate. Steel rods are shown protruding through all three of the **H3** holes; metal spacers are shown around two of the rods, and the third rod is shown without a spacer.

**Figure 3** shows the interior of the treatment module, with one steel rod **(R1)** and one treatment tube core **(TC)** in place. The treatment tube core **TC** is shown in greater detail in subsequent drawings. Inside the treatment tube core **TC** is a rod **R2** made of fiberglass or other stiff material that keeps the core straight. The core snaps into an end-piece **EP1** that is shown in greater detail in subsequent drawings. The drawing shows an outer view of plate **P1** and an inner view of another plate **P2.** A pair consisting of plates **P1** and **P2** is placed at each end of the module, with **P1** on the outside and **P2** on the inside in both cases. The plates are held together by screws that pass from holes **H1** in **P1** to posts **PP1** in **P2.**

**Figure 4** shows the same image as **Figure 3****,** but with plate **P1** removed from the top of the module.

**Figure 5** shows the tube core **TC** and one end-piece **EP1.** The core is a skeletal structure with rings (**Ri1**) attached to longitudinal members **(LM).** In the fully operational system, each tube core **TC** resides inside a loosely-fitting mesh tube sleeve **(TS)** (not shown in this Figure); when water flows from outside to inside the sleeve, the tube core **TC** prevents the sleeve from collapsing on itself. As shown in **Figure 6****,** the prongs on the rings hold the stiff rod **R2** in place, which in turn maintains the linearity of the tube core **TC.** The rod **R2** also serves a function of occupying space so that water entering the core flows out of the system more quickly. A typical diameter for the rod **R2** is 1-to-5 mm. The core can be made any material that meets the same requirements as the module shell. It can be constructed by connecting units that are 7.5-to-61 cm in length and that snap or are glued together to reach the desired length. The core diameter is typically from 0.4-to-2.0 cm, with gaps between the rings of 0.6-to-5.1 cm. The prongs should be long enough so that they just touch the rod **R2.**

**Figure 7** shows a cross-section of the end piece **EP1.** The smooth outer surface penetrates through the end plates **EP1** and **EP2.** The ribbed outer surface is where the tube sleeve **TS** is attached, and the structure in the interior provides a stop for the rod **R2.**

**Figures 8-13** show example alternative designs for the tube core.

**Figure 14** shows the interior of a similar treatment module but with self-supporting porous tubes (*e.g*. tubular membranes) replacing the combination of tube sleeve **TS,** tube core **TC,** and stiffening rod **R2.** The tubular membranes typically have outside diameters of 0.6-to-5 cm.

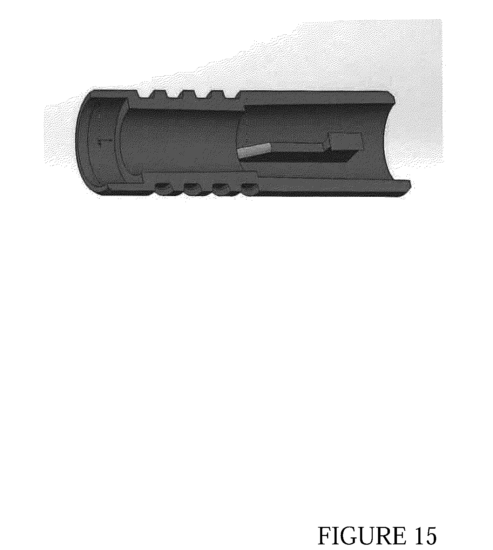

**Figure 15** shows a modified end-piece **(EP2)** that could be used if the tube cores **(TC)** were permanently potted in an epoxy layer rather than being individually removable and held in place by the two pairs of end-plates. This end-piece has the advantage that the portion that is smooth on the outside can be as large as the ribbed portion, thereby allowing a larger cross-section for water flow.

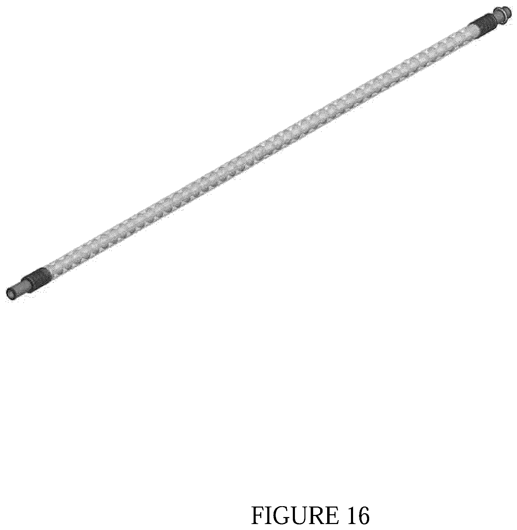

**Figure 16** shows a mesh sleeve **(MS)** that has been slipped over the core and attached to the end pieces.

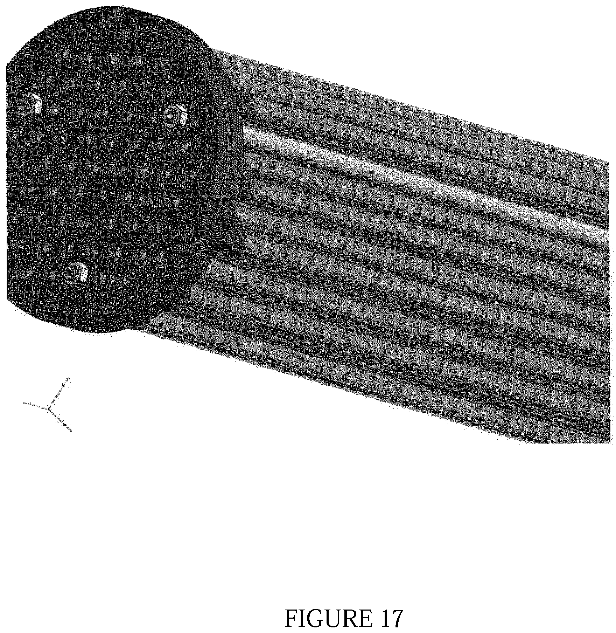

**Figure 17** shows the inside of a finished module packed with tubes.

### Hydraulic operation of a typical system.

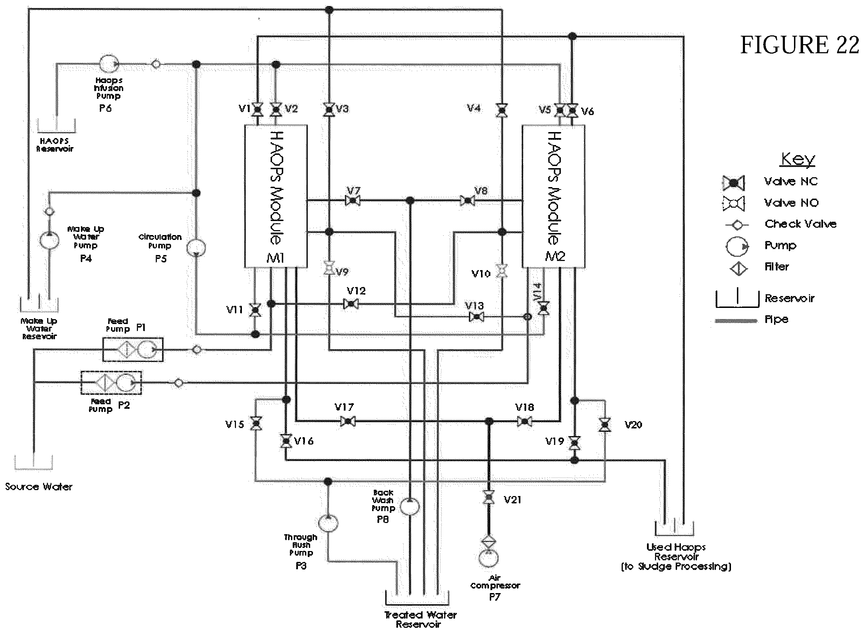

A hydraulic system that can accomplish all the steps in the operation is shown in Figure 22. In this diagram, valves are shown as Normally Open (NO) or Normally Closed (NC) to indicate their default states. Thus, when an NO valve is energized it closes, and when an NC valve is energized it opens. The pipes that are shown penetrating the module at the top and bottom are hydraulically connected to the "tube side" of the module (i.e., to the interiors of the tubes), whereas those that are shown penetrating the sides of the module are hydraulically connected to the "shell side" (i.e., inside the shell, but outside the tubes).

The system can be operated with one or more treatment modules functioning independently (parallel mode) or with the outflow from one module serving as the feed to the next module in the sequence (series mode).

### Operating a Single Module in Isolation

The sequence of steps applicable to Module 1 operating alone or in parallel with Module 2 is as follows; the specific components mentioned are identified by reference to Figure 22:
- **Adsorbent Deposition Step:** HAOPs infusion pump P6 is turned on to inject particles from the adsorbent reservoir into the tubes in module M1. Simultaneously, Make Up Water Pump P4 and Circulation Pump P5 are turned on. Valves V11 and V2 are energized to allow water to enter the mesh tubes from the bottom of the module and exit those tubes from the top. The flow rate of P5 is set to a value less than the sum of the flow rates through P4 and P6, forcing some flow to exit through the tube walls as the water passes through M1. Valves V3 and V9 are energized to allow this water to flow out of M1 and flow to the Make Up Water Reservoir. Although water flows through the mesh, the adsorbent particles in the water are captured by the mesh and remain inside the tubes in M1.
- **Adsorbent Consolidation Step:** After the desired mass of adsorbent has been injected into the tubes, pump P6 is turned off. All other components remain in the states specified in the Adsorbent Deposition Step until the water returning to the Make Up Water Reservoir is clear, indicating that all of the injected adsorbent has been retained on the tube walls. Pumps P4 and P5 are turned off, and valves V2, V3, and V11 are de-energized.
- **Water Treatment Step:** Pump P1 is turned on and valve V9 is de-energized, causing the feed water to enter the tubes, pass through the adsorbent layer and mesh, and exit the module to flow to the Treated Water Reservoir. This step continues until a trigger condition is reached to terminate it. Typical trigger conditions include exceeding the specified maximum duration of the treatment step, exceeding the specified maximum contaminant concentration in the treated water, or exceeding the specified maximum pressure required to push water through the system.
- **Module Cleaning Step:** Pump P1 is turned off. Valves V1, V7, V9 and V16 are energized, and Pump P8 is turned on to backwash the tubes by causing water to flow into the shell side and out both the top and bottom of the tubes in M1. Then Pump P8 is turned off, valve V16 is de-energized and valve V15 is energized, and pump P3 is turned on to flush the tubes. Optionally, pump P7 can be turned on and valves V17 and V21 can be energized to inject air during the flushing procedure. The backwashing and flushing steps can be repeated sequentially several times. Once this step is completed, the cycle begins again with the Adsorbent Deposition Step.

### Operating Multiple Modules in Parallel

If multiple modules are operated in parallel, the piping and sequence of steps for each module replicates that described above for a single module, with some components (e.g., all the valves and pumps P1 and P2) dedicated to individual modules and others (e.g., pumps P4, P5, and P6) shared among several modules. For the two-module system shown in Figure XX1, valves V5, V4, V10 and V14 in Module M2 correspond to valves V2, V3, V9 and V11 in M1, respectively.

### Operating Multiple Modules in Series

Multiple modules can also be operated in series mode. To initiate water treatment:
- The **Adsorbent Deposition Step** and **Adsorbent Consolidation Step** are carried out simultaneously or sequentially for the two modules, with each step identical to that for operation of a single module as described above.
- **First Water Treatment Step, M1 → M2.** Pump P1 is turned on and valves V9 and V13 are energized. These steps cause water to enter the tubes in M1, exit through the side of M1, and then enter the tubes in M2 before exiting the side of M2 and entering the Treated Water Reservoir. This step continues until one of the triggers to end it is reached.
- **Cleaning Module M1 and Returning it to Service.** Pump P1 is turned off, P2 is turned on, and valve V13 is de-energized. Module M1 is then cleaned, and the Adsorbent Deposition and Adsorbent Consolidation steps are carried out for M1, all by the same procedures as are used when M1 is operated in isolation.
- **Water Treatment Step, M2 → M1.** Valves V10 and V12 are energized, and V9 is de-energized. These actions cause the water exiting M2 to enter M1, where it is treated before being directed to the Treated Water Reservoir.
- **Cleaning Module M2 and Returning it to Service.** Pump P2 is turned off, P1 is turned on, and valve V12 is de-energized. Module M2 is then cleaned, and the Adsorbent Deposition and Adsorbent Consolidation steps are carried out for M2, all by the same procedures as are used when M2 is operated in isolation.
- **Second and Subsequent M1 → M2 Water Treatment Steps.** Valves V9 and V13 are energized, and V10 is de-energized. These actions cause the water exiting M1 to enter M2, where it is treated before being directed to the Treated Water Reservoir. When this step is ended because a trigger is reached, the system returns to the step "Cleaning Module M1 and Returning it to Service", and the final four steps in this sequence repeat.

### Example 1: Phosphorus removal from domestic wastewater using µGAF with HAOPs

Excessive discharges of phosphorus (P) in treated sewage and urban and agricultural runoff have led to the choking of lakes, rivers, and bays with algae. In addition to their foul odor and unsightly appearance, these algae deplete the oxygen supply in the water, killing fish and other aquatic organisms, and release toxins that can force shutdowns of water treatment plants that provide water for human consumption. To avoid these impacts, phosphorus must be removed from wastewater to levels of approximately 0.05 mg/l or lower. Existing technologies cannot achieve this goal at reasonable cost. In the tests described here, phosphorus was removed from domestic wastewater that had been conventionally treated in a membrane bioreactor (MBR) by passing the water through a thin (<1 mm) layer of Heated Aluminum Oxide Particles (HAOPs) in a microgranular adsorptive filtration (µGAF) reactor.

Removal of P was investigated from MBR effluent from the Brightwater Wastewater Treatment Plant (WWTP) in Woodinville, WA. The total phosphorus (TP) in these solutions was almost identical to the soluble reactive phosphorus (SRP), so only SRP was analyzed. HAOPs were synthesized as described by Kim et al.³.
3 Kim, J., Cai, Z., Benjamin, M.M., 2008. Effects of adsorbents on membrane fouling by natural organic matter, J. Membr. Sci. 310, 356-364.

The tests were conducted using two modules, each containing six 2-foot-long mesh tubes with 14-mm diameters and 10-µm openings. HAOPs were deposited on the inner surface of these tubes, and the modules were operated in series as described in the preceding process description. The HAOPs loading on the mesh was 40 g Al/m², and the water flux through the tubes in each module was 200 liters per square meter per hour (lmh). The experiments lasted seven (7) days, with each filtration step lasting four hours (i.e., every four hours, the upstream module was taken offline, cleaned and returned to service in the downstream position).

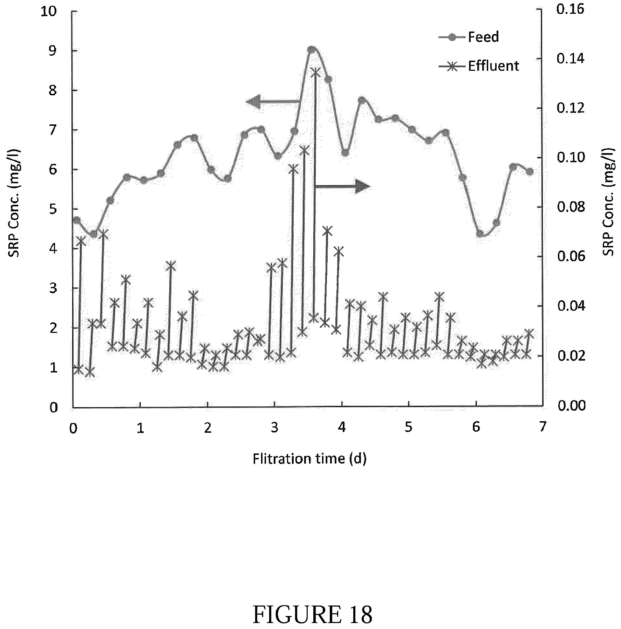

As shown in Figure 18, the effluent from the µGAF reactor always contained <0.05 mg SRP/l, with the only significant excursion occurring when the feed concentration briefly exceeded 9mg/l. The average feed and filtrate SRP concentrations during the entire test were 6.32 and 0.032 mg/l, corresponding to 99.5% removal. Thus, µGAF treatment of domestic wastewater reliably achieved the goal of removing the vast majority of the P concentration from the wastewater and lowering the concentration in the final product to <0.05 mg/l.

Figure 18. SRP removal from treatment of MBR effluent in a µGAF reactor at the Brightwater WWTP. HAOPs loading: 40 g Al/m²; Flux: 200 lmh.

### Example 2: Removal of natural organic matter from drinking water sources and mitigation of membrane fouling using µGAF with HAOPs alone or in combination with powdered activated carbon (PAC)

Natural organic matter (NOM) in drinking water sources is problematic for multiple reasons. Among these are that it reacts with disinfectants such as chlorine to form disinfection byproducts (DBPs) that are tightly regulated because they are suspected and/or known to be carcinogenic, and it can severely impede the performance of membranes that are used to remove pathogenic microorganisms and other contaminants. Although the conventional approach for capturing NOM - coagulation with aluminum or iron salts - can remove a portion of the NOM and mitigate membrane fouling, improving these outcomes remains a high priority in the drinking water field. Current USEPA regulations require that 0 to 50% of the total organic carbon (TOC) be removed from drinking water sources, depending on the TOC and the alkalinity in the raw water. TOC is an indicator of the NOM concentration.

Freshwater was collected from Lake Union (LU) at Portage Bay, Seattle, WA. The pH of the water was 7.5±0.3. The samples contained 2.2-2.5 mg/l TOC and had UV absorbance at 254 nm (UV₂₅₄) of 0.053-0.062 cm⁻¹. Almost all of the TOC is contributed by dissolved species, so the TOC was essentially identical to the DOC (dissolved organic carbon). The buffer capacity and ionic strength were increased by adding 0.5 mM each of NaHCO3 and NaCl, and the pH was adjusted to 7.0±0.05. If this water were used as a drinking water source, the USEPA requirement would be that 35% of the TOC be removed by treatment. HAOPs were synthesized following the method of Kim et al.⁴ The PAC used in the study was Norit SA SUPER. All filtration tests used 47-mm disk filters installed into filter cartridges. Paper filters (Whatman^{®}, grade 40) with a nominal pore size of 8 µm were used to hold the adsorbent in µGAF experiments. Polyethersulfone ultrafiltration (UF) membranes with a nominal pore size of 0.05 µm were used in membrane filtration experiments. For DBP formation potential (DBPFP) tests, the chlorine doses were chosen to generate residual free chlorine concentrations of 1.0±0.1 mg/l as Cl₂ after 24 hours of contact.
4 S. Modarresi, M.M. Benjamin, 2018. Insights and model for understanding natural organic matter adsorption onto mixed adsorbents, Environ. Sci. Technol. 52, 6343-6349.

To pretreat the water by batch adsorption, flasks containing the water were dosed with the desired type(s) and amount(s) of adsorbent and placed on a rotary shaker for two hours. The solids were then removed by filtration through paper filters, and the solutions were used in subsequent membrane filtration experiments.

For pretreatment by µGAF, a cartridge was fitted with a paper filter, and a slurry of the adsorbent(s) was injected with a syringe while gently shaking the cartridge to help distribute the adsorbent uniformly. Feed was pumped into the µGAF unit to generate a constant flux of 150 lmh, and the effluent from the cartridge was collected for subsequent analysis or membrane filtration.

The effective adsorbent dose in these tests was defined as the ratio of the mass of adsorbent in the µGAF layer to the volume of water treated. The NOM removal efficiency for a given effective dose was defined as the DOC concentration in a composite sample of all the treated water from the beginning of the experiment until the time when that effective dose was reached.

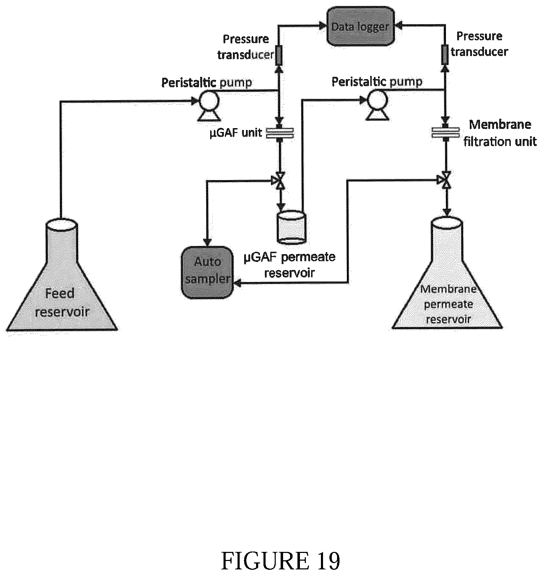

The membrane filtration tests were conducted in cartridges identical to those used for µGAF, but with a membrane replacing the paper filter, no pre-deposition of adsorbent, and a fixed flux of 100 lmh. The experimental set-up for the µGAF-membrane experiments is shown schematically in Figure 19.

### Figure 19. Schematic setup of sequential filtration system

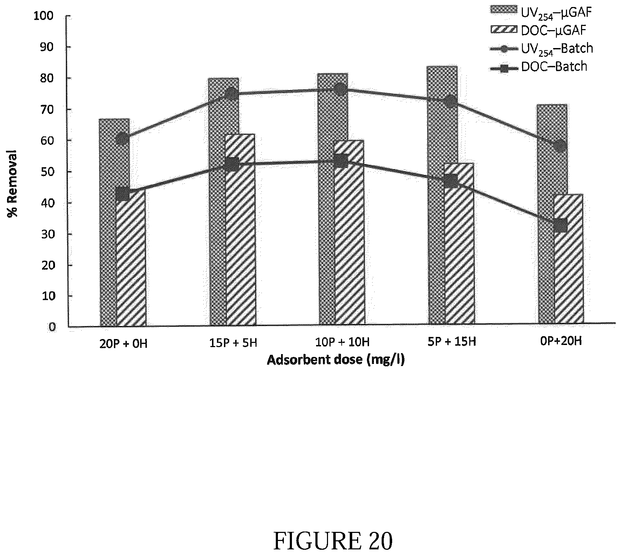

The dissolved organic carbon (DOC) concentration and UV254 were used as indicators of the NOM concentration in these experiments. The NOM removal efficiencies achieved by µGAF using mixtures of the two adsorbents at a fixed effective adsorbent dose of 20 mg/l are shown in Figure 20, along with the results from batch experiments at the same dose. A substantial fraction of the NOM was removed from the water in every experiment (enough to meet the EPA requirement for drinking water). NOM removal in the µGAF experiments was greater when the adsorbent comprised a mixture of HAOPs and PAC than when either adsorbent was present alone. Furthermore, for identical mixtures of the adsorbents, µGAF pretreatment always removed more NOM than batch pretreatment did.

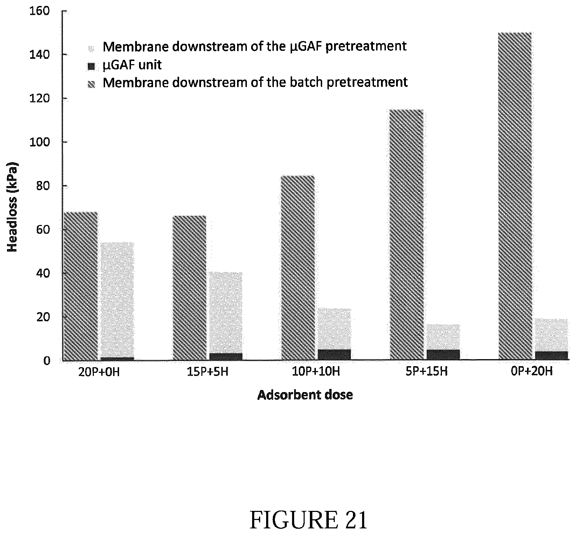

Next, raw water and water that had been pretreated in each system characterized in Figure 20 were fed to UF membranes. The magnitude and trends in fouling in all the systems investigated are compared in Figure 21 for a fixed total effective adsorbent dose of 20 mg/l. For pretreatment by 20 mg/l PAC and no HAOPs (designated 20P + 0H in the figure), switching from batch to µGAF pretreatment led to a detectable but small decline in overall system fouling. However, as PAC was replaced with HAOPs (i.e, moving from left to right in the figure), fouling of the membrane increased dramatically for batch pretreatment, whereas both membrane fouling and total (µGAF plus membrane) fouling decreased dramatically for µGAF pretreatment. As a result, at the other extreme (0P + 20H), the overall system fouling after filtration of 2000 1/m² of water was almost an order of magnitude less severe for µGAF pretreatment than for the more conventional, batch approach to pretreatment.

Two tightly regulated groups of DBPs are trihalomethanes (THMs) and haloacetic acids (HAAs). The effectiveness of µGAF at reducing the THM formation potential (THMFP) and HAA formation potential (HAAFP) of the source water was evaluated in three of the waters discussed above: those treated with HAOPs only, with PAC only, and with a 1:1 mixture of the two adsorbents. As summarized in Table ZZ1, the mixed adsorbents reduced the DBPFP more than either pure adsorbent did. Thus, µGAF treatment using either HAOPs alone or a mixture of HAOPs and PAC provided substantial benefits over more conventional water treatment approaches with respect to both removal of contaminants from the water and facilitating further treatment by membrane filters.

**Table ZZ1. DBP formation potential of µGAF-treated LU water**

| Adsorbent and Effective Dose | THMFP (µg/l) | % Removal | HAAFP (µg/l) | % Removal |
|---|---|---|---|---|
| None (Raw LU Water) | 103.1 | | 60.9 | |
| 20 mg/l PAC | 37.4 | 63.7 | 19.7 | 67.6 |
| 20 mg/l HAOPs | 38.6 | 62.6 | 12.6 | 79.3 |
| 10 mg/l HAOPs + 10 mg/l PAC | 21.4 | 79.2 | 9.0 | 85.3 |

Those of ordinary skill in the art will conceive of other alternate embodiments of the invention upon reviewing this disclosure. Thus, the invention is not to be limited to the above description, but is to be determined in scope by the claims which follow.

## Claims

1. A treatment module, comprising:
a tube core (TC) of a skeletal structure including longitudinal members (LM) and rings (Ri1), the rings (Ri1) being attached to the longitudinal members (LM); and
a loosely-fitting mesh tube sleeve (TS) in which the tube core (TC) resides,
wherein adsorbent particles are deposited on an interior surface of the loosely-fitting mesh tube sleeve (TS),
wherein the tube core (TC) prevents the mesh tube sleeve (TS) from collapsing when water flows from outside to inside of the mesh tube sleeve (TS), and, said treatment module being **characterized in that** it further comprises prongs, which are disposed on the rings (Ri1) and which hold a rod inside the tube core (TC) to keep the tube core (TC) straight.

2. The treatment module of claim 1, wherein the mesh tube sleeve (TS) is attached to end pieces (EP1), and the tube core (TC) snaps into each of the end pieces (EP1).

3. The treatment module of claim 1, wherein the tube core (TC) has an elongated shape along a longitudinal direction, and the mesh tube sleeve (TS) has a tubular shape covering the tube core (TC).

4. The treatment module of claim 1, further comprising:
an epoxy layer in which the tube core is potted.

5. The treatment module of claim 1, wherein the adsorbent particles include Heated Aluminum Oxide Particles (HAOPs) or Heated Iron Oxide Particles (HIOPs).

## Patentansprüche

1. Behandlungsmodul, das umfasst:
einen Rohrkern (TC) aus einer Skelettstruktur, die Längselemente (LM) sowie Ringe (Ri1) beinhaltet, wobei die Ringe (Ri1) an den Längselementen (LM) befestigt sind, und
eine locker sitzende Gewebenetzrohrhülle (TS), in welcher der Rohrkern (TC) liegt, wobei Adsorptionspartikel auf einer Innenfläche der locker sitzenden Gewebenetzrohrhülle (TS) abgelagert sind,
wobei der Rohrkern (TC) verhindert, dass die Gewebenetzrohrhülle (TS) kollabiert, wenn Wasser von außen in das Innere der Gewebenetzrohrhülle (TS) strömt und
wobei besagtes Behandlungsmodul **dadurch gekennzeichnet ist, dass** es ferner Zacken umfasst, die auf den Ringen (Ri1) angeordnet sind und die einen Stab im Inneren des Rohrkerns (TC) halten, um den Rohrkern (TC) gerade ausgerichtet zu halten.

2. Behandlungsmodul nach Anspruch 1, wobei die Gewebenetzrohrhülle (TS) an Endstücken (EP1) befestigt ist und der Rohrkern (TC) in jedes der Endstücke (EP1) einschnappt.

3. Behandlungsmodul nach Anspruch 1, wobei der Rohrkern (TC) eine längliche Form entlang einer Längsrichtung aufweist und die Gewebenetzrohrhülle (TS) eine rohrförmige Form aufweist, die den Rohrkern (TC) bedeckt.

4. Behandlungsmodul nach Anspruch 1, das ferner umfasst:
eine Epoxidschicht, in welcher der Rohrkern eingetopft ist.

5. Behandlungsmodul nach Anspruch 1, wobei die Adsorptionspartikel erhitzte Aluminiumoxidpartikel (HAOPs) oder erhitzte Eisenoxidpartikel (HIOPs) beinhalten.

## Revendications

1. Module de traitement comprenant :
une âme de tube (TC) à structure squelettique incluant des éléments longitudinaux (LM) et des anneaux (Ri1), les anneaux (Ri1) étant fixés aux éléments longitudinaux (LM) ; et
un manchon tubulaire à mailles lâche (TS) dans lequel l'âme de tube (TC) est logée,
dans lequel des particules adsorbantes sont déposées sur une surface intérieure du manchon tubulaire à mailles lâche (TS),
dans lequel l'âme de tube (TC) empêche le manchon tubulaire à mailles (TS) de s'affaisser lorsque de l'eau s'écoule de l'extérieur vers l'intérieur du manchon tubulaire à mailles (TS), et
ledit module de traitement étant **caractérisé en ce qu'**il comprend en outre des griffes qui sont disposées sur les anneaux (Ri1) et qui retiennent une tige à l'intérieur de l'âme de tube (TC) afin de maintenir l'âme de tube (TC) droite.

2. Module de traitement selon la revendication 1, dans lequel le manchon tubulaire à mailles (TS) est fixé à des parties terminales (EP1) et l'âme de tube (TC) s'enclenche dans chacune des parties terminales (EPI).

3. Module de traitement selon la revendication 1, dans lequel l'âme de tube (TC) présente une forme allongée le long d'une direction longitudinale et le manchon tubulaire à mailles (TS) présente une forme tubulaire recouvrant l'âme de tube (TC).

4. Module de traitement selon la revendication 1, comprenant en outre :
une couche époxy dans laquelle l'âme de tube est enrobée.

5. Module de traitement selon la revendication 1, dans lequel les particules adsorbantes incluent des particules d'oxyde d'aluminium chauffées (HAOPs) ou des particules d'oxyde de fer chauffées (HIOPs).
